# EUROPEAN PATENT SPECIFICATION

(11) **EP 2 073 001 B1**
(45) Date of publication and mention of the grant of the patent: **12.09.2012**
(21) Application number: 07254986.8
(22) Date of filing: 20.12.2007
(51) Int. Cl.: G01N 23/20, G01V 5/00

(54) **Detection of superoxides with fast neutrons**
Erkennung von Superoxiden mit schnellen Neutronen
Détection de super oxydes au moyen de neutrons rapides

(43) Date of publication of application: 24.06.2009
(73) Proprietor: Hamilton Sundstrand Corporation, Windsor Locks, CT 06096 (US)
(72) Inventor: Zillmer, Andrew J., Woodland Hills CA 91367 (US); Johnson, Gregory A., Camarillo, CA 93012 (US)
(74) Representative: Tomlinson, Kerry John

(56) References cited:
- WO-A-2004/109331
- US-A- 5 076 993
- US-A- 5 600 303
- SEABURRY. E.H. ET AL: "Explosive Detection and Identification by PGNAA" November 2004 (2004-11), XP002471392 Retrieved from the Internet: URL:http://www.inl.gov/technicalpublicatio ns/Documents/3028247.pdf> [retrieved on 2008-03-03]
- SUDAC ET AL: "Identification of materials hidden inside a container by using the 14MeV tagged neutron beam" NUCLEAR INSTRUMENTS & METHODS IN PHYSICS RESEARCH, SECTION - B: BEAM INTERACTIONS WITH MATERIALS AND ATOMS, ELSEVIER, AMSTERDAM, NL, vol. 261, no. 1-2, 19 July 2007 (2007-07-19), pages 321-325, XP022151929 ISSN: 0168-583X
- SAMPAYAN ET AL: "Applications of ultra-compact accelerator technologies for homeland security" NUCLEAR INSTRUMENTS & METHODS IN PHYSICS RESEARCH, SECTION - B: BEAM INTERACTIONS WITH MATERIALS AND ATOMS, ELSEVIER, AMSTERDAM, NL, vol. 261, no. 1-2, 19 July 2007 (2007-07-19), pages 281-285, XP022151920 ISSN: 0168-583X

## Description

### BACKGROUND OF THE INVENTION

The present invention generally relates to the field of detecting compounds in a sample. In particular, the invention relates to detecting superoxides in a sample.

Although superoxides by themselves can be inert chemicals, they can pose a large threat when mixed with other chemicals. The combination of superoxides with other chemicals, such as organics, can be used to make explosives. Because organics, such as acetone, are present in numerous household products, it is more efficient to monitor the presence of superoxides in sealed containers. By detecting and prohibiting large amounts of oxidizers in sensitive areas, the threat of mixing two chemicals to form an explosive fuel can be greatly reduced.

A method currently being used to detect explosives is to use a small neutron source to detect the presence of nitrogen. An exemplary prior art method is disclosed in US 5076993. Nitrogen in a sample can indicate nitrates, which is a common oxidizer in explosives. As the neutrons hit atoms in the sample, they react with the atoms and produce gamma rays. The energy, number, and intensity of gamma rays produced from the sample are measured to determine whether the sample contains specified amounts of nitrogen. If necessary, the sample can then be pulled and examined for explosive potential. However, this technique of detecting nitrogen is not capable of detecting superoxides. The ability to quickly and accurately detect oxidizers being housed within sealed containers can help prevent explosive chemicals from being carried onto vehicles such as airplanes, trains, buses, etc.

### BRIEF SUMMARY OF THE INVENTION

The invention provides a method of detecting compounds in a sample to indicate the presence of explosives, the method comprising: passing fast neutrons through the sample at energies of at least 6 Million Electron Volts; and detecting gamma rays released from the sample; characterised by the step of analyzing the gamma rays released from the sample to determine whether a superoxide is present within the sample.

An embodiment of the invention will now be described by way of example and not limitation.

### BRIEF DESCRIPTION OF THE DRAWINGS

FIG. 1 is a schematic view of a detection system used to detect superoxides in a sample.
FIG. 2 is a diagram of a method of detecting superoxides in a sample.

### DETAILED DESCRIPTION

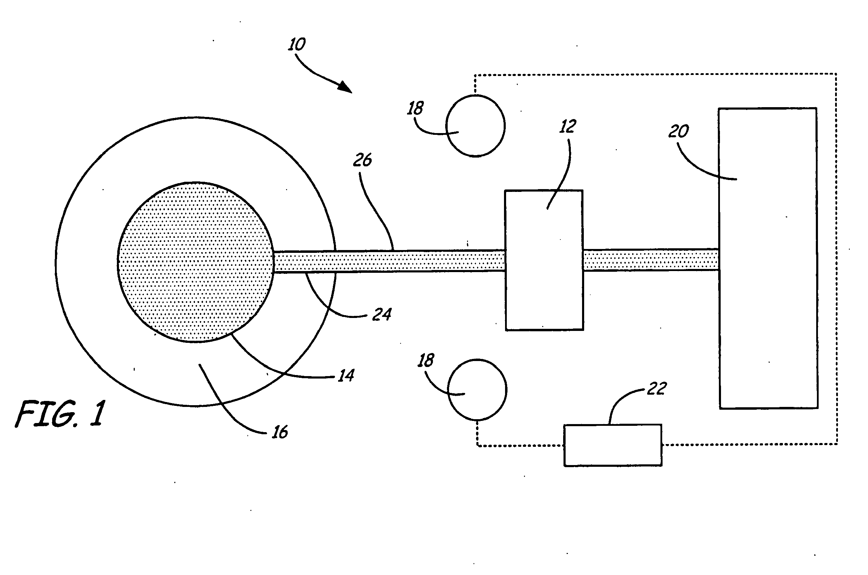

FIG. 1 shows a schematic view of detection system 10 used to detect superoxides in sample 12. Detection system 10 generally includes neutron source 14, shield 16, gamma ray detectors 18, beam dump 20, and signal processor 22. Detection system 10 allows for quick and accurate detection of hazardous chemicals in sample 12, which may be, for example, a closed container. In particular, because superoxides can be used in combination with other chemical compounds to form explosives, detecting superoxides can significantly help prevent the threat of explosions. Examples of superoxides that are potentially dangerous include, but are not limited to: sodium superoxide, potassium superoxide, cesium superoxide, and rubidium superoxide.

Neutron source 14 is positioned upstream of sample 12 and directs fast neutrons toward sample 12. Shield 16 surrounds neutron source 14 to help minimize radiation close to personnel and to prevent damage to objects in close proximity to neutron source 14. Shield 16 has an opening 24 that aligns a beam of neutrons 26 from neutron source 14 with sample 12. Neutron beam 26 is sent from neutron source 14 toward sample 12 at energies greater than at least 6 Million Electron Volts (MeV). As neutron beam 24 strikes sample 12, the neutrons react with the atoms in sample 12 and produce gamma rays at discrete energies based on the atoms present in sample 12. Neutron source 14 may include, but is not limited to: a compact neutron source, a fusion neutron source, or a nuclear reactor with a fast neutron spectrum.

Gamma ray detectors 18 are positioned proximate sample 12 and detect the gamma rays released when neutron beam 26 strikes sample 12. Gamma ray detectors 18 have energy resolutions that allow gamma ray detectors 18 to measure the energy, number, and intensity of the gamma rays produced by sample 12 based on the specific energies of the neutrons in neutron beam 24. The ratio of gamma ray energies can then be measured and compared to determine if sample 12 has a higher concentration of superoxide than an amount predetermined as potentially dangerous. In one embodiment, gamma ray detectors 18 may include, but are not limited to: high purity germanium, cadmium zinc telluride, and thallium-doped sodium iodide.

The number and intensity of the gamma rays produced by sample 12 are then be sent to signal processor 22 and recorded. Signal processor 22 analyzes the amounts, intensities, energies, and ratios of gamma rays to determine the elements that make up sample 12 and provide an output to a user. Because gamma ray detectors 18 are capable of measuring the energy, number, and intensity of atoms present in sample 12, signal processor 22 can distinguish the presence of superoxides from the presence of other, less harmful compounds. This is because each element produces gamma rays at particular energies and gamma ray detectors 18 are capable of recording the particular energies and intensities of the gamma rays produced to be analyzed by signal processor 22.

When neutron beam 24 reaches sample 12, some of the neutrons will not strike sample 12. The neutrons in neutron beam 24 that pass through sample 12 continue on to beam dump 20, which acts as a shield and collects the neutrons to ensure that they do not unintentionally strike personnel or other objects proximate detection system 10.

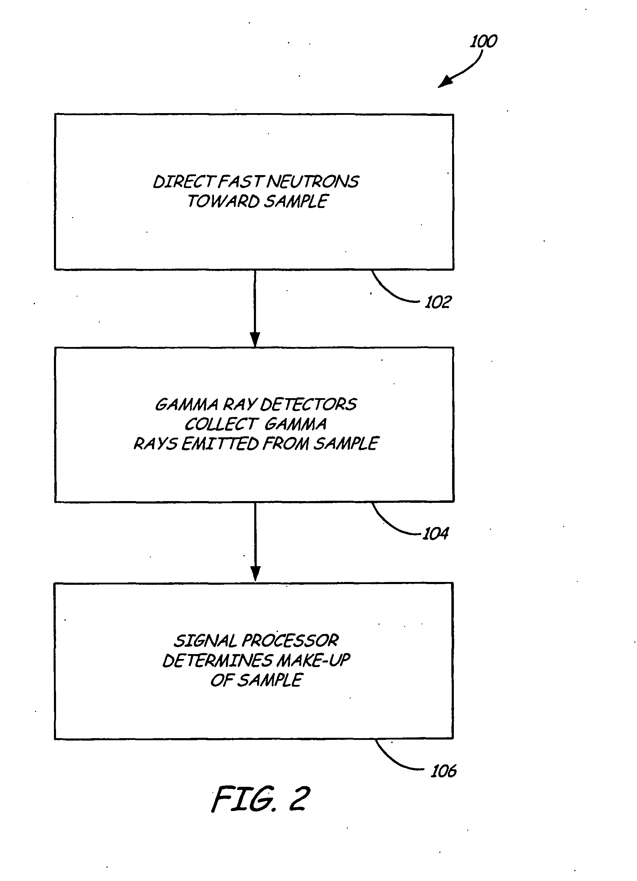

FIG. 2 shows a diagram of a method 100 of detecting superoxides in sample 12. When a sample is to be examined for superoxides, neutron source 14 emits neutron beam 24 through opening 22 of shield 16 toward sample 12, Box 102. As neutron beam 24 strikes sample 12, the neutrons react with the atoms present in sample 12 and gamma rays are released. A plurality of gamma ray detectors 18 are positioned proximate sample 12 and detect the gamma rays produced from sample 12, Box 104. In one embodiment, gamma ray detectors 18 measure the type, number, and intensity of gamma rays released from sample 12. As depicted in Box 106, the information collected from gamma ray detectors 18 is then sent to signal processor 26, which uses the information to determine the concentration of atoms present in sample 12. Signal processor 26 may then provide an output detailing the make up of sample 12 to a user. Any neutrons from neutron beam 24 that do not strike sample 12 are subsequently collected in beam dump 20.

The detection system detects potentially dangerous superoxide compounds which may be housed in a sealed container. A shield with an opening aligned with the sample is positioned around the neutron source to protect personnel from the neutron beam. As the neutron beam strikes the sample, gamma rays are released and detected by a plurality of gamma ray detectors positioned proximate the sample. The gamma ray detectors detect the energy, number, and intensity of the gamma rays being released from the sample. Any remaining neutrons that do not strike the sample are collected in a beam dump positioned downstream of the sample. The quick and accurate detection of superoxides in samples may reduce the potential threat of explosives on vehicles.

Although the present invention has been described with reference to preferred embodiments, workers skilled in the art will recognize that changes may be made in form and detail without departing from the scope of the invention, which is defined by the claims and their equivalents.

## Claims

1. A method of detecting compounds in a sample to indicate the presence of explosives, the method comprising:
passing fast neutrons through the sample at energies of at least 6 Million Electron Volts; and
detecting gamma rays released from the sample;
**characterised by** the step of analyzing the gamma rays released from the sample to determine whether a superoxide is present within the sample.

2. The method of claim 1, wherein detecting gamma rays comprises detecting the number of gamma rays released from the sample.

3. The method of claim 1 or 2, wherein detecting gamma rays comprises detecting the intensity of gamma rays released from the sample

## Patentansprüche

1. Verfahren zum Detektieren von Verbindungen in einer Probe zum Anzeigen der Anwesenheit von Explosivstoffen, wobei das Verfahren umfasst:
Passieren von schnellen Neutronen durch die Probe bei einer Energie von zumindest 6 Millionen Elektronen-Volt; und
Detektieren von Gammastrahlen, die von der Probe abgegeben wurden;
**gekennzeichnet durch** den Schritt des Analysierens der Gammastrahlen, die von der Probe abgegeben wurden, um zu bestimmen, ob innerhalb der Probe ein Superoxid vorhanden ist.

2. Verfahren nach Anspruch 1, wobei das Detektieren von Gammastrahlen das Detektieren der Anzahl von Gammastrahlen umfasst, die von der Probe abgegeben wurden.

3. Verfahren nach Anspruch 1 oder 2, wobei das Detektieren von Gammastrahlen das Detektieren der Intensität von Gammastrahlen umfasst, die von der Probe abgegeben wurden.

## Revendications

1. Procédé de détection de composés dans un échantillon pour indiquer la présence d'explosifs, le procédé comportant les étapes consistant à :
faire passer des neutrons rapides à travers l'échantillon à des énergies d'au moins 6 millions d'électrons-volts ; et
détecter des rayons gamma dégagés par l'échantillon ;
**caractérisé par** l'étape consistant à analyser les rayons gamma dégagés par l'échantillon pour déterminer si un super-oxyde est présent au sein de l'échantillon.

2. Procédé selon la revendication 1, la détection des rayons gamma comportant l'étape consistant à détecter le nombre de rayons gamma dégagés par l'échantillon.

3. Procédé selon la revendication 1 ou 2, la détection des rayons gamma comportant l'étape consistant à détecter l'intensité des rayons gamma dégagés par l'échantillon.
